# EUROPEAN PATENT SPECIFICATION

(11) **EP 4 254 863 B1**
(45) Date of publication and mention of the grant of the patent: **21.10.2026**
(21) Application number: 22165536.8
(22) Date of filing: 30.03.2022
(51) Int. Cl.: H04L 9/40

(54) **METHOD FOR NETWORK-CENTRIC CALL VERIFICATION AND SCAM PROTECTION**
VERFAHREN FÜR NETZZENTRISCHE ANRUFÜBERPRÜFUNG UND BETRUGSSCHUTZ
PROCÉDÉ DE VÉRIFICATION DES APPELS ET DE PROTECTION CONTRE LES ESCROQUERIES DANS UN RÉSEAU CENTRAL

(43) Date of publication of application: 04.10.2023
(73) Proprietor: Deutsche Telekom AG, 53113 Bonn (DE)
(72) Inventor: Haberkorn, Günter, 92262 Birgland/Schwend (DE); Jepsen, Kathrin, 12205 Berlin (DE); Weidemann, Jens, 52074 Aachen (DE); Böttcher, Andreas, 69469 Weinheim (DE); König, Bianca, 12159 Berlin (DE)
(74) Representative: karo IP

(56) References cited:
- US-A1- 2019 014 064
- US-B1- 10 785 369

## Description

This invention relates to a method for network-centric call verification and scam protection. In addition, this invention relates to a scam detection unit for network-centric call verification. Moreover, this invention relates to a corresponding computer program product for call verification and scam protection.

Due to fraudulent calls tricks victims lose their money and/or their information is stolen. This problem affects every private person as well as companies and their boards. Examples for fraudulent calls tricks are grandparent calling scam, call center calling scam or CEO Fraud. When it is analyzed how these fraudsters operate, we see that they start with of social engineering, take over digital identities or phone numbers (CLI spoofing fixed line & mobile) and software to trick victims. It is all in common that the high professional procedure runs over the networks of telecommunication network provider.

Exemplary the CEO fraud scam call is described here. CEO Fraud is a type of scam call attack in which the attacker impersonates a CEO. Typically, the attacker aims to trick the victim into transferring money to a bank account owned by the attacker, to send confidential HR information, or to reveal other sensitive information. While applying voice distortion by deep fake it is hard to detect for the victim, that he/she is not being called by the 'right' person. According to the FBI, the worldwide losses add up to 2.8 billion euros. However, affected companies not only suffer direct damage, but their reputation is also at stake. As a result, many victims conceal their crimes.

The central problem is the lack of trustworthiness of callers via mobile or fixed line. Even if there are end-to-end encrypted Voice over IP (VoIP) apps for making calls or hardened smartphones, normal (TDM) calls (fixed, mobile) remain an important part of our daily communication. But precisely for this area, there are hardly any solutions so far that secure the identities of both calling parties and give the other party security.

This trust gap devalues the entire telephony. Consequently, important calls from companies are missed or not answered, callers become victims of fraud and network operator loose business, generate blind services, or cannot provide services because they are blocked, e.g., by call robots.

The following prior art documents describe different procedures for verifying calls and for defending against fraudulent calls. EP 3 566 427 B1 describes a caller verification server that receives a verification request message from a calling party via a data network. The verification request is associated with a communication from the calling party to a called device placed via a telephone network. The telephone network is logically separate from the data network. Thus, the verification request message travelling over the data network is said to be "out-of-band" relative to the telephone network. EP 3 571 828 B1 describes a carrier platform that sends a query requesting CNAM information associated with a call to a CNAM database. A caller reputation server intercepts the query from the carrier platform to the CNAM database. The caller reputation server determines reputation information for the call. The reputation information indicates the likelihood that the call is a nuisance call. The caller reputation server further generates a reputation message describing the reputation information and sends the reputation message to the carrier platform in response to the query. As a result, the carrier platform sends the reputation message to a called device. WO 2021/138518 A1 describes a method of operation that includes receiving a call message intended for a call recipient, removing one or more portions of call message data included in the call message. identifying one or more of a trunk group and an onto point associated with the received call message, adding one or more of a trunk group identifier and a universally unique identifier to the call message to create a modified call message. and forwarding the modified call message to a destination network associated with the call recipient. The document US 10 785 369, 22nd September 2020 (2020-09-22), discloses a scam detection system within a carrier network that assesses call behaviour and assigns reliability and behaviour scores.

The objective of the underlying invention is to provide a method for network-centric call verification and scam detection with a better protection, higher efficiency and improved usability for the user. Furthermore, it is an objective of this invention to provide a scam detection unit, which is suitable to perform the method. Moreover, it is objective invention to provide a computer program product for call verification and scam detection with a better protection, higher efficiency and improved usability for the user

The underlying objective is solved by a method which has the features of the first claim. Advantageous embodiments of the invention are given by the dependent claims.

The method according to the invention comprises the following steps:
- a calling step, in which a first user makes a call by means of a first device to reach a second user having a second device, wherein the call comprises call identification information;
- a detection step, in which the call identification information is detected by a scam detection unit located in a central network section;
- a verification step, in which the scam detection unit determines the trustworthiness the call by the first user based on the call identification information, and classifies the trustworthiness into at least two security categories; and
- a notification step, in which the security category to which the call by the first user has been classified is communicated to the second device of the second user, wherein the call identification information is detected from a header of the call.

The first user uses the first device to call the second device of the second user. For example, the devices are a normal phone, a mobile phone, a lap top, a notebook, a computer, a smart phone or the like. The call, in particular the corresponding call message, comprises identification information that are related to the call of the first user. This identification information is detected by the scam detection unit located in central network section, wherein the central network section is responsible for establishing the connection between the first device and the second device and is controlled, at least in parts, by the operator of the telecommunication network. The scam detection unit is a logical or physical entity that is located in the central part of the telecommunication network and that is configured to determine the trustworthiness of the call by analyzing the detected call identification information. Based on this information the scam detection unit classifies the call of the first user into at least two security categories. After the classification of the call of the first user the result, respectively the security category, is communicated to the second device of the second user. Based on the notified security category the second device performs preferably automatically further steps. For example, the second device displays the security category of the call.

Due to the evaluation of the call identification information the scam detection unit is preferably able to determine the trustworthiness of the first user in an accurate way. This is due in particular to the fact that the call identification information is sent with each call and therefore provide a reliable and defined basis for determining credibility or trustworthiness of the first user.

According to a preferred aspect of the invention the call identification information is detected from a header information of the call, in particular of the corresponding call message. The usage of the header information of the call has the advantage that it is sent with each call and contains valuable identification information regarding this call. In addition, the header for the call is defined so that the identification information could be easily and reliably detected by the scam detection by an automatic procedure. It is in particular preferred that the information relating the call is a Uniform Resource Identifier (URI), a FROM information, a History Info Header (HIH), a Trunk ID, P-asserted identity (PAI) and/or a Network-Gateway identification. For example, the Uniform Resource Identifier (URI) is a specified string of characters that identify the resource of the call. For example, the FROM information is in particular derivable form the header of the Session Initiation Protocol (SIP) and provides information regarding the identity of the call. For example, the History Info Header (HIH) is also in particular part of the SIP-Header and is generated by a user agent or proxy and is passed from one entity to another through requests and responses in order to provide a way of capturing any redirection information that may have occurred on a particular call. For example, the Trunk ID provides information about where the call entered a trunk system. For example, the P-Asserted-Identity header field can be used to convey the proven identity of the originator of a request within a trusted network. All those information's are standardized and usually transmitted within the header of a call so that the scam detection unit is able to detect this call identification information in a simple and reliable way, in particular automatically.

According to a preferred aspect of the invention a scam probability is determined within the verification step on basis of the call identification information. Preferably the scam probability indicates the plausibility, that the call identification information of the call is plausible. The scam probability is determined on basis of the detected call identification information. For example, it is checked whether the detected call identification information is plausible in view of number origin (country), location, format, call interface, call pattern, and/or traffic profiling. In particular, it is checked whether the call identification information is plausible with regard to a ITU range lists, wherein for example the number range and/or the number length is checked for plausibility. For that the scam detection unit preferably has access to a network data bases in order to compare the call identification information with stored network data. By determining a numerical probability, it is easy to decide if the call is a scam call or not.

In a further preferred aspect of the invention the scam probability is compared to a threshold value, wherein the threshold value is used to classify the call of the first user to a first security category, which is associated with a trustworthy first user, or a second security category, which is associated with a fraudulent first user. It is in particular preferred that the call of the first user is classified to the first security category, when the scam probability is below the threshold, and the call of the first user is classified to the second security category, when the scam probability is above the threshold. preferably the definition of the threshold which is compared to the determined probability provides the simple and the reliable way to decide whether the call is a trustworthy call or a fraudulent call.

According to a preferred aspect of the invention the security category of the call of the first user is communicated to the second device of the second user as caller identification name (CNAM) and/or service capability field (SCF) in a call, in particular in the corresponding call message, to the second device of the second user. Preferably the security category of the call of the first user is displayed on the second device of the second user as the caller identification name. The CNAM-field is a defined field in the header of a call and normally used to indicate the name of the caller (first user). Also, the service capability field (SCF) is a defined field in the header. However, according to this aspect of the invention the CNAM-field and/or the SCF is used to indicate the security category of the call of the first user. For example, a pre-defined string like "scam call" is communicated to the second device so that the second user immediately recognizes a fraudulent call of a first user. In this way the trustworthiness of the first user can be advantageously communicated to the second device on which no security application or security computer program product according to the invention is implemented, in particular a normal phone.

According to a preferred aspect of the invention a security computer program product is implemented in the first device of the first user, wherein the caller identification name in the call to the second device of the second user contains an information that indicates a third security category, which is associated with a pre-verified first user. Preferably the caller identification name (CNAM) and/or the service capability field (SCF) contains the name, the organization, the status and/or reason for the call of the first user. In order to implement the security computer program product in the first device of the first user the first user has to perform a registration and/or an identity verification in which the identity of the first user is securely verified. The first user is then a so called onboarded user. The registration and/or identity verification is preferably performed via NECT, passport application, smart credential or the like. Due to this registration and/or identity verification the scam detection unit knows that the first user and its device are verified and therefore a call from the first user is not a scam call. Like the first security category (trustworthy user) and the second security category (fraudulent user) the third security category (pre-verified user) is communicated to the second device of the second user within the CNAM-Field and/or SCF. In this way the third security category (pre-verified user) can be communicated to the second device on which no security application or security computer program product according to the invention is implemented, in particular a normal phone. Preferably, the first user is a customer and the second user is a company, so that the company can trust the customer identification. In addition, more information based on the telecommunication network analysis of the call can be shared with the second user (company), for example a know your customer score, a trust score or the like.

In a further preferred aspect of the invention the first user has a contract with a network operator that operates the central network section, and wherein the caller identification name (CNAM) and/or the service capability field (SCF) contains a defined information related to the first user, in particular a brand, a logo or a trade mark of the first user. This enrichment of the call for example can be used by a company as first user in order to enhance the call acceptance rate and trust on the customer site (second user).

According to an aspect of the invention a security computer program product is implemented in the second device of the second user that is configured to receive a communication form a security computer program product backend located in the central network section with a notification of the security category of the first user. Preferably the scam detection unit is connected with the security computer program product backend and via an application programming interface (API). The connection between the network centric security computer program product backend and the security computer program product implemented in the second device of second user provides an improved/sophisticated communication between the scam detection unit and the second device of the second user. This advantageously allows to communicate more detailed information regarding trustworthiness of the call to the second user.

In a further preferred aspect of the invention the security computer program product
- initiates a blocking of the call by the second device of the second user
- initiates a redirected call by the second device of the second user to the first device of the first user, and/or
- initiates an optical and/or acoustical warning by the second device, in particular to initiate the displaying of a fraudulent call by a display unit of the second device of the second user,
when the second category is communicated to the second device. Preferably the security program product implemented in the second device allows the definition of method steps that have to be performed by the second device when the second security category (fraudulent user) is communicated to the second device. For example, such scam call can be automatically blocked or redirected by the second device. In addition, warning can be initiated on the second device. Advantageously this method steps increase the security of the second user because defined steps are performed when the second user is called by fraudulent user. It is in particular preferred that the security computer program product is configured to define which steps are initiated. Preferably in that the second user makes a selection by means of a selection unit of the second device. In this way the user-friendliness and flexibility of the scam detection is improved.

According to an aspect of the invention the security program product is configured to define user categories of first users that are classified as with the first security class. For example, those user categories of first users are telemarketing user, private user or survey user. This means that the security computer program product implemented in the second device of the second user defines the categories to which first users that calls the second user are allocated. Advantageously, this provides a user-friendly solution because the second user knows the user category of the first user.

In a further preferred aspect of the invention the security computer program product is configured to define rules for each of the user categories, which cause steps to be performed by the second device upon receipt of a call from a user of this user category. Preferably the steps are:
- to initiate a blocking of the call by the second device of the second user,
- to initiate a redirected call by the second device of the second user to the first device of the first user,
- to initiate a voicemail by the second device of the second user to the first device of the first user,
- to initiate the displaying of a call of the user category by a display unit of the second device of the second user, and/or
- to initiate the entry of the first user in a white list or black list.

Preferably the security program product implemented in the second device allows the definition of method steps that have to be performed by the second device when a call from a certain user category is received. **It** is in particular preferred that the computer program product is configured to define which step or steps is/are initiated. Preferably the second user makes a selection by means of a selection unit of the second device. In this way the user-friendliness and flexibility of the scam detection is improved.

According to a further aspect of the invention wherein the user categories are stored in a category data base and/or the defined rules are stored in a rules data base. In particular the category data base and the rules data base are located within the central network section. The usage of the category database and the rules database preferably provides a location and device independent management of the user categories and the related rules by the second user. In addition, the category database and the rules database could preferably be maintained and operated by the operator of the telecommunication network. Advantageously, this provides a more reliable and user-friendly scam detection.

According to a preferred aspect of the invention a first security computer program product is implemented in the first device of the first user and a second security computer program product is implemented in the second device of the second user, wherein the second security computer program product receives a communication form a security computer program product backend located in the central network section with a notification of a third security category of the first user, which is associated with a pre-verified first user. The implementation of the security computer program product in both devices (first device and second device) provides in addition a save connection between both devices via the network centric security computer program product backend. Preferably, an end-to-end encryption is used for the call between both devices in order to provide a more secure connection between the first user and the second user. The security between the call participants essentially consists of whether security computer program product is implemented in both devices, accompanied by an onboarding or registration/identity verification process. Preferably, the security computer program product will replace the native telephone application on the devices, e.g. smartphones.

According to a preferred aspect of the invention a warning of staff is initiated by the scam detection unit when the call of the first user is classified as fraudulent call (second security category).

The underlying objective is also solved by a scam detection unit for call verification located in a central network section is configured to:
- detect a call identification information of a call of a first user by means of a first device to reach a second user having a second device, wherein the call comprises call identification information;
- verify the trustworthiness of the call by the first user based on the call identification information, and to classify the trustworthiness into at least two security categories; and
- to notify the security category to which the call by the first user has been classified by a communication to the second device of the second user, wherein the call identification information is detected from a header of the call.

The scam detection unit is a physical or logical entity that is configured to perform the above-described method steps for call verification and scam detection. Preferably, the scam detection unit is implemented as server system and/or cloud computer entity. It is located in the central network section and preferably maintained and operated by an operator of the telecommunication network. The scam detection unit is configured to detect the call identification information, in particular from the header of the call originating from the first device of the first user. In addition, the scam detection unit is connected with the security computer program product backend via an application programming interface. Also preferably, the scam detection unit has access to a user category database, a rules database, a scam artificial intelligence unit and/or a network data base.

The underlying problem is also solved by a computer program product for domain name resolution which, when executed by a user device, causes the user device:
- to establish a connection with a security computer program product backend, that is located in a central network section and connected to a scam detection unit;
- to perform one the above method steps that are related to cases when the security computer program product is implemented in the user device of the second user.

The security computer program product causes the user device of the second user to perform the above defined method steps relating to the cases in which the security computer program product is implemented in the second device. In particular, the underlying security computer program product causes the second device to be configured to receive a communication from the security computer program product backend that contains a notification of the security category of the first user (e.g. pre-verified user, trustworthy user or fraudulent user). In particular, when the second security category is communicated (fraudulent user) the security computer program product initiates the blocking of the call, the redirection of the call and/or an optical and/or acoustical warning by the second device. In particular, the security computer program product is configured to define user categories of first users. Preferably, rules for each of the user categories can be defined by the security computer program product, which caused steps to be performed on reception of a call from the corresponding user category. For example, those steps are to initiate a blocking call, to initiate a redirection of the core, to initiate a voice mail, to initiate a displaying of the user category and/or to initiate the entry of the first user in a white list or a black list. In particular, the security computer program product is configured to define which steps are performed by means of a selection unit of the second device. Preferably, the security computer program product has access to a user category database and/or a rules database that are located within a central network section and in particular operated and maintained by the telecommunication network operator.

In the following, preferred embodiments of the present invention are described with reference to the figures:
- Fig. 1:: shows a schematic flow chart of the method steps of the underlying invention,
- Fig. 2:: shows a schematic overview of an embodiment the underlying invention,
- Fig. 3a:: shows a schematic overview of an embodiment of the invention, in which a computer program product is implemented in the first device of the first user and the computer program product is also implemented in the second device of the second user,
- Fig. 3b.:: shows a schematic overview of an embodiment of the invention, in which the computer program product is implemented in the first device of the first user and the computer program product is not implemented in the second device of the second user,
- Fig. 3c:: shows a schematic overview of an embodiment of the invention, in which the computer program product is not implemented in the first device of the first user and the computer program product is implemented in the second device of the second user, wherein the first user is a trustworthy first user,
- Fig. 3d:: shows a schematic overview of an embodiment of the invention, in which the computer program product is not implemented in the first device of the first user and the computer program product is implemented in the second device of the second user, wherein the first user is a fraudulent first user, and
- Fig. 4:: shows an overview of the call flow and telecommunication network architecture for a method for call verification and scam detection according to the underlying invention.

Below, features of the invention are explained by way of a preferred embodiment. The present disclosure is not limited to the specifically named combinations of features. Rather, the features mentioned here can be combined arbitrarily into inventive embodiments, unless this is expressly excluded.

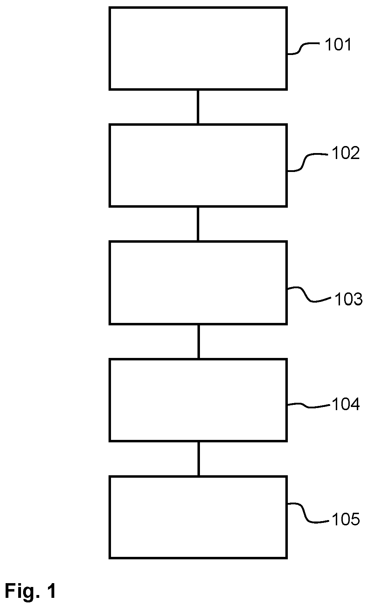

Fig. 1 shows a flow chart of the underlying method for call verification and scam detection. In the calling step 101 the first user A performs a call by means of a first device 1a, 1b, 1c in order to reach a second user B with a second device 2.

The call comprises a call identification information, in particular within the corresponding call message. This call identification information is detected by a scam detection unit 10 in the detection step 102. Based on the call identification information the scam detection unit 10 determines the trustworthiness of the call by the first user A in a verification step 103. In the verification step 103 the trustworthiness is classified into at least two security categories 21, 22, 23. In a notification step 104 the determined security category 21, 22, 23 to which the call by the first user A has been classified is communicated to the second device 2 of the second user B. Based on the communicated security category 21, 22, 23 the second device 2 performs a reaction step 105. For example, blocking the call, redirecting the call, initiate an optical and/or acoustical warning or the like.

In the detection step 102 the call identification information is detected from a header information of the call from the first device 1, in particular from a corresponding call message. Preferably, the information relating the call is a Uniform Resource Identifier (URI), a FROM information, a History Info Header (HIH), a Trunk ID, P-asserted identity (PAI) and/or a Network-Gateway identification.

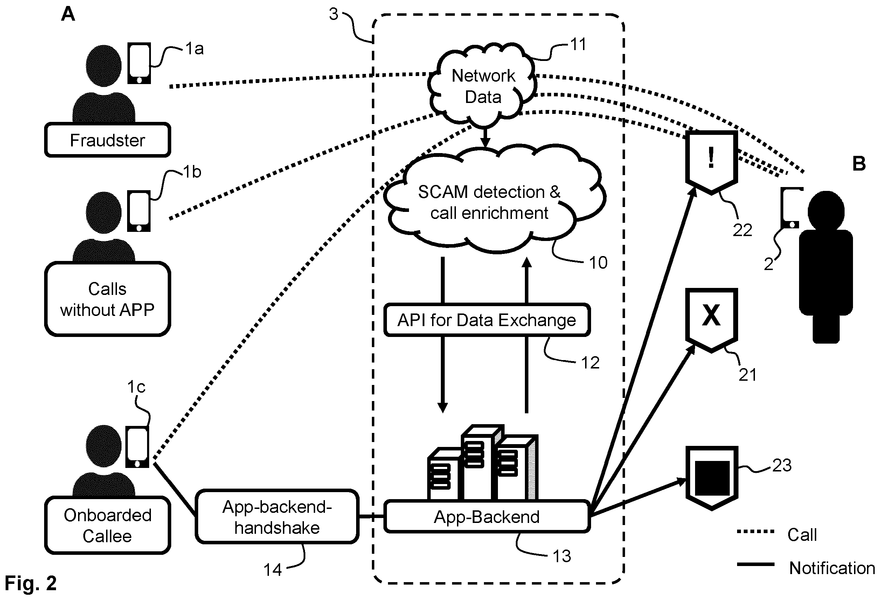

Fig. 2 shows a schematic overview of an embodiment of the invention. The first user A uses its first device 1a, 1b, 1c in order to call the second user B who has the device 2. The call (dotted line) is made through the telecommunication network and routed through a central network section 3. For scam detection the cellular network section 3 comprises a scam detection unit 10. This scam detection unit 10 is configured to detect the call identification information of the call from the first user A. Based on the detected call identification information the scam detection unit 10 verifies the trustworthiness of the call. The first user A is classified into three security categories, wherein the first security category 21 corresponds trustworthy first user with the first device 1b, the second security category 22 corresponds to a fraudulent first user with the first device 1a, and the third category 23 corresponds to pre-verified first user with the first device 1c. The security category 21, 22, 23 determined by the scam detection unit 10 is notified to the second user B by a communication or message to the second device 2. In addition, to the call identification information the scam detection unit 10 also uses the data of a network data base 11 in order to compare the call identification information with stored network data. For example, the network data base 11 comprises a ITU range list as additional information for plausibility calculation.

In Fig. 2 the fraudulent first user A with the first device 1a and the trustworthy user with the first device 1b use devices 1a, 1b on which a security computer program product (APP) is not implemented. Based on the core identification information the scam detection unit 10 determines whether a first user A without implemented security computer program product is a trustworthy user (first security category 21) or a fraudulent user (second security category 22). The plausibility for a fraudulent call is preferably indicated by a scam probability that is determined based on the call identification information. This scam probability is compared to a threshold in order to assign the first user A to the first security category 21 or two the second security category 22. The determined security category 21 or 22 is then communicated to the second device 2 of the second user B.

In contrast, on the first device 1c of the first user the security computer program product 30a (APP) is implemented and the first user has performed the registration and/or identity verification in which the person has been verified. This is the so called onboarded user. This pre-verified user corresponds to the third security category 23. In this case an app-backend-handshake 14 is performed between the security computer program product on the first device 1c and a security computer program product backend 13 (APP-Backend). The security computer program product backend 13 is located in the central network section 3 and preferably operated and maintained by the telecommunication network operator. The security computer program product backend 13 is a logical or physical entity implemented in a server structure, virtual machine or a cloud computer. It exchanges data with the scam detection unit 10 via an application programming interface 12. In case of an onboarded user or pre-verified user the third security category 23 is communicated to the second device 2 of the second user B. Here, Fig. 2 shows that the notification with the third security category 23 is communicated to the second device 2 by the security computer program product backend 13.

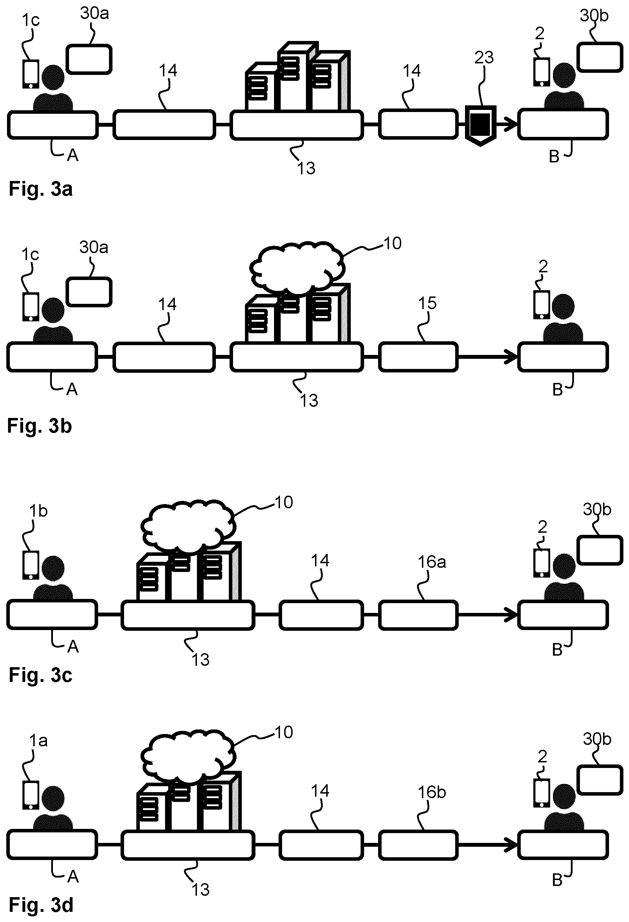

Fig. 3a shows schematically an embodiment in which the security program product 30a is implemented on the first device 1c of the first user A and a corresponding security computer program product 30b is implemented on the second device 2 of the second user B. In this case the first user A corresponds to the pre-verified or onboarded user and the third security category 23 is communicated by the security computer program product backend 13 to the security computer program product 30b implemented in the second device 2 of the second user B. The communication between the first device 1c and the second device 2 is preferably Voice over IP (VoIP) and end-to-end encrypted. In this constellation the security of the communication is based on a secure and personalized registration or onboarding process of both users.

Fig. 3b shows schematically an embodiment in which the security program product 30a is implemented on the first device 1c of the first user A and no corresponding one is implemented on the second device 2 of the second user B. In this case only the first user A is onboarded and an app-backend-handshake 14 is performed between the security computer program product 30a on the first device 1c and the security computer program product backend 13. Thus, the scam detection unit 10 classifies the call from the first user A to the third security category 23. The third security category 23 is communicated to the second device by an enriched call 15. The enriched call 15 is a normal call in which the information indication the third security category 23 is transmitted as caller identification name (CNAM) and/or in the service capability field (SCF). For example, a verified call, name of caller and reason of the call is communicated to the second device 2. Preferably, the first user A has a contract with the telecommunication network operator so that the first user (e.g. call center) can enrich normal calls in order to realize higher call acceptance and trust on customer site. In addition, in this case the enriched call 15 comprises a brand overlay and/or a "verified" label from the first user A. This embodiment represents a fallback solution, in which the security computer program product 30b is not implemented on the second device 2.

Fig. 3c shows schematically an embodiment in which no security program product is implemented on the first device 1b of the first user A, but the security computer program product 30b is implemented on the second device 2 of the second user B. In Fig. 3c the first user A with the device 1b is trustworthy user that corresponds to the first security category 21. The first security category 21 determined by the scam detection unit 10 is communicated from the security computer program product backend 13 to the security computer program product 30b implemented in the second device 2 via the app-backend-handshake 14. In reaction to the communication of the first security category 21 the second user B can define or adjust the corresponding reaction by the second device 2 initiated by the security computer program product 30b implemented on the second device 2 (user-initiated adjustment of reaction 16a). In particular, the security computer program product 30b is configured to define user categories of the first users A, like telemarketing user, private user or survey user. For these user categories different rules can be defined, in particular by the security computer program product 30b, which cause steps to be performed by the second device. These steps are for example blocking of the call, redirection of the call, initiation of a voicemail, displaying of the user category by a display unit of the second device 2 and/or entry of the first user A in a white list or black list. These rules can be defined by the second user B by means of the security computer program product 30b implemented in the second device 2.

Fig. 3d shows schematically an embodiment in which no security program product is implemented on the first device 1a of the first user A, but the security computer program product 30b is implemented on the second device 2 of the second user B. In Fig. 3d the first user A with the device 1a is a fraudulent user that corresponds to the second security category 22. In this case also the second security category 22 determined by the scam detection unit 10 is communicated from the security computer program product backend 13 to the security computer program product 30b implemented in the second device 2 via the app-backend-handshake 14. In reaction to the communication of the second security category 22 the second user B can define or adjust the corresponding reaction by the second device 2 initiated by the security computer program product 30b implemented on the second device 2 (user-initiated adjustment of reaction 16b). For example, the security computer program product 30b initiates a blocking of the call, the redirection of the call and/or an optical and/or acoustical warning by the second device 2.

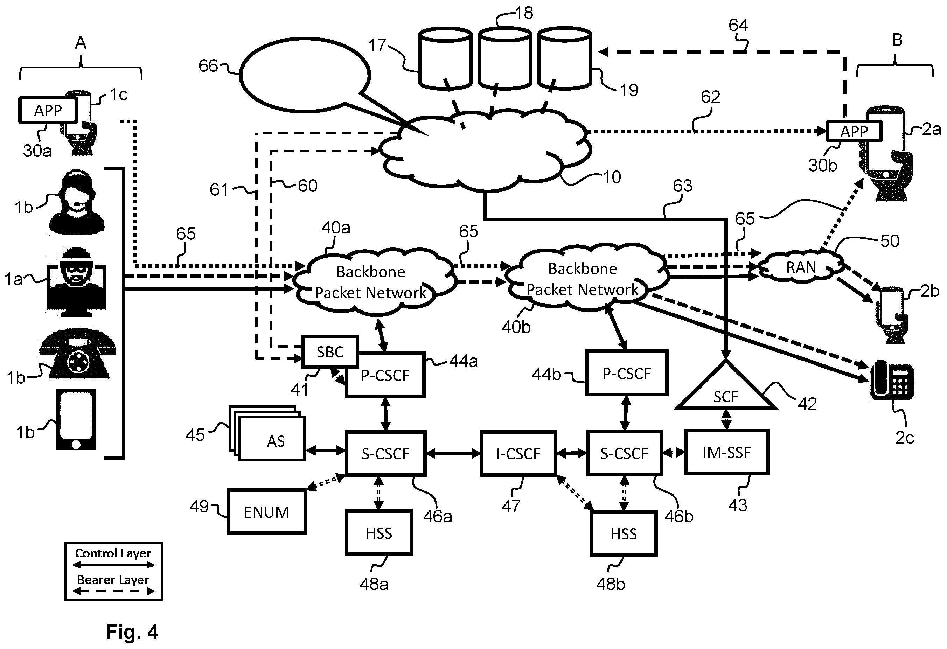

Fig. 4 shows an exemplary overview of the call flow and telecommunication architecture for a method for call verification and scam detection. The call between the first user A with the first device 1a, 1b, 1c to the second user B with the second device 2 is performed via the first backbone packet network 40a to which the first device 1a, 1b, 1c is connected and the second backbone packet network 40b to which the second device 2a, 2b, 2c is connected. When the second device 2a, 2b is mobile telephone, in addition a Radio Access Network 50 (RAN) is used for the connection.

The network architecture corresponds to the IP multimedia subsystem (IMS). With regard to the first backbone packet network 40a this architecture comprises a first Proxy Call Session Control Function 44a (P-CSCF), a first Service-Call Session Control Function 46a (S-CSCF), a first Home Subscriber Server 48a (HSS), a telephone number mapping 49 (ENUM) and an Application Server 45 (AS). With regard to the second backbone packet network 40b the architecture comprises a second Proxy Call Session Control Function 44b (P-CSCF), a second Service-Call Session Control Function 46b (S-CSCF), a second Home Subscriber Server 48b (HSS) and an IP Multimedia Service Switching Function 43 (IM-SSF). The control layer connection between both backbone packet networks 40a and 40b is provided by an Interrogating Call Session Control Function 47 (I-CSCF).

The first Proxy Call Session Control Function 44a (P-CSCF) is connected to a session border controller 41. This session border controller 41 provides the scam detection unit 10 with the call identification information, respectively scam sensor data 60. The reception of the call identification information from the session border controller 41 corresponds to the detection step 102. In addition, the session border controller 41 receives network control information 61 from the scam detection unit 10. The network control information 61 initiates for example blocking of calls by the first user A and/or the redirection of calls to the first user A.

The architecture provides two service chains via the scam detection unit 10 communicates with the second device 2 of the second user B. A first service chain to the second user 62 is provided when the security computer program product 30b of the second device 2a can be reached by the scam detection unit 10, in particular via the security computer program product backend (not shown in Fig. 4). Via the first service chain to the second user 62 the scam detection unit 10 communicates the security category 21, 22, 23 to the security computer program product 30b of the second device 2a. In addition, call labelling, category enrichment and user-initiated adjustment of reaction can be communicated to the security computer program product 30b by using the first service chain 62. A second service chain to the second user 63 is provided when a security computer program product cannot be reached in the second device 2b and 2c. In this case the security category, call labelling, category enrichment and user-initiated adjustment of reaction is communicated to a service capability function 42. By using the service capability function 42 the security category, call labelling, category enrichment and user-initiated adjustment of reaction are communicated is communicated in an enriched call. In the enriched call the corresponding information is inserted in the caller identification name (CNAM) and/or the service capability field (SCF). This information is communicated to the mobile device without app 2b via the Radio Access Network 50 (RAN). The PSTN device without app 2c receives this information directly from the second backbone packet network 40b.

The security computer program product 30b of the second device 2a is configured to send a user control information 64 to the scam detection unit 10, the category data base 17 and the rules data base 18. With the user control information 64 the second user B can control the rules and steps that are performed when a certain security category and/or user category is determined.

When the security computer program product 30a is implemented on the first device 1c of the first user A and the security computer program product 30b is implemented on the second device 2a of the second user B the communication between both is preferably an end-to-end encrypted communication 65.

Preferably, a warning of staff 66 is initiated by the scam detection unit 10 when the call of the first user is classified as fraudulent call (second security category).

### References

- A: first user (calling user)
- B: second user (called user)

- 1: fist device
- 1a: first device (of a fraudulent user)
- 1b: first device (of a user without app)
- 1c: first device (of a onboarded user)
- 2: second device
- 2a: second device (mobile with app)
- 2b: second device (mobile without app)
- 2c: second device (PSTN without app
- 3: central network section

- 10: scam detection unit
- 11: network data
- 12: application programming interface
- 13: security computer program product backend
- 14: app-backend-handshake
- 15: enriched call
- 16a: user-initiated adjustment of reaction
- 16b: user-initiated adjustment of reaction (blocking of call)
- 17: category data base
- 18: customer rule data base
- 19: SCAM artificial intelligence unit

- 21: first security category (trustworthy)
- 22: second security category (fraudulent)
- 23: third security category (pre-verified)
- 30a: security computer program product, APP (implemented on first device)
- 30b: security computer program product, APP (implemented on second device)

- 40a: first backbone packet network (of first user)
- 40b: second backbone packet network (of second user)
- 41: session border controller
- 42: service capability function
- 43: IP Multimedia Service Switching Function, IM-SSF
- 44a: first Proxy Call Session Control Function, P-CSCF (of first user)
- 44b: second Proxy Call Session Control Function, P-CSCF (of second user)
- 45: Application Server, AS
- 46a: first Service-Call Session Control Function, S-CSCF (of first user)
- 46b: second Service-Call Session Control Function, S-CSCF (of second user)
- 47: Interrogating Call Session Control Function, I-CSCF
- 48a: first Home Subscriber Server, HSS (of first user)
- 48b: second Home Subscriber Server, HSS (of second user)
- 49: ENUM, telephone number mapping
- 50: Radio Access Network, RAN

- 60: SCAM sensor data, call identification information
- 61: network control information (blocking, redirection)
- 62: first service chain of second user with APP
- 63: second service chain of second user without APP
- 64: user control information (rules, blocking, redirection, white/blacklist)
- 65: end-to-end encrypted communication
- 66: warning of staff

- 101: calling step
- 102: detection step
- 103: verification step
- 104: notification step
- 105: reaction step

## Claims

1. Method for call verification and scam detection comprising the following steps:
- a calling step (101), in which a first user (A) makes a call by means of a first device (1a, 1b, 1c) to reach a second user (B) having a second device (2), wherein the call comprises a call identification information;
- a detection step (102), in which the call identification information is detected by a scam detection unit (10) located in a central network section (3);
- a verification step (103), in which the scam detection unit (10) determines the trustworthiness of the call by the first user (A) based on the call identification information, and classifies the trustworthiness into at least two security categories (21, 22, 23); and
- a notification step (104), in which the security category (21, 22, 23) to which the call by the first user (A) has been classified is communicated to the second (2) device of the second user (B), wherein the call identification information is detected from a header of the call.

2. Method for call verification and scam detection according to claim 1, wherein the call identification information is a Uniform Resource Identifier (URI), a FROM information, a History Info Header (HIH), a Trunk ID, P-asserted identity (PAI) and/or a Network-Gateway identification.

3. Method for call verification and scam detection according to one of the previous claims, wherein a scam probability is determined within the verification step (103) on basis of the call identification information.

4. Method for call verification and scam detection according to claim 3, wherein the scam probability is compared to a threshold value and wherein the threshold value is used to classify the call of the first user (A) to a first security category (21), which is associated with a trustworthy first user (A), or a second security category (22), which is associated with a fraudulent first user (A), in particular wherein the call of the first user (A) is classified to the first security category (21), when the scam probability is below the threshold, and the call of the first user (A) is classified to the second security category (22), when the scam probability is above below the threshold.

5. Method for call verification and scam detection according to one of the previous claims, wherein the security category (21, 22, 23) of the call of the first user (A) is communicated to the second device (2) of the second user (B) as caller identification name (CNAM) and/or the service capability field (SCF) in a call to the second device (2) of the second user (B), in particular wherein the security category (21, 22, 23) of the call of the first user (A) is displayed on the second device (2) of the second user (B) as the caller identification name (CNAM).

6. Method for call verification and scam detection according to claim 5, wherein a security computer program product (30a) is implemented in the first device (1c) of the first user (A), wherein the caller identification name (CNAM) and/or the service capability field (SCF) in the call to the second device (2) of the second user (B) contains an information that indicates a third security category (23), which is associated with a pre-verified first user (A), in particular wherein the caller identification name (CNAM) contains the name, the organization, the status and/or reason for the call of the first user (A).

7. Method for call verification and scam detection according to claim 6, wherein the first user (A) has a contract with a network operator that operates the central network section (3), and wherein the caller identification name (CNAM) and/or the service capability field (SCF) contains a defined information related to the first user (A), in particular a brand, a logo or a trade mark of the first user (A).

8. Method for call verification and scam detection according to one of the claims 1 to 4, wherein a security computer program product (30b) is implemented in the second device (2) of the second user (B) that is configured to receive a communication form a security computer program product backend (13) located in the central network section (3) with a notification of the security category (21, 22, 23) of the first user (A).

9. Method for call verification and scam detection according to claim 8, wherein the security computer program product (30b)
- initiates a blocking of the call by the second device (2) of the second user (B),
- initiates a redirected call by the second device (2) of the second user (B) to the first device (1a) of the first user (A), and/or
- initiates an optical and/or acoustical warning by the second device (2), in particular to initiate the displaying of a fraudulent call by a display unit of the second device (2) of the second user (B),
when the second security category (22) is communicated, in particular wherein the computer program product (30b) is configured to define which step is initiated, preferably in that the second user (B) makes a selection by means of a selection unit of the second device (2).

10. Method for call verification and scam detection according to claim 8, wherein the security computer program product (30b) is configured to define user categories of first users (A) that are classified as with the first security category (21), for example those user categories of first users (A) are telemarketing user, private user or survey user.

11. Method for call verification and scam detection according to claim 10, wherein the security computer program product (30b) is configured to define rules for each of the user categories, which cause steps to be performed by the second device (2) upon receipt of a call from a user of this user category, in particular wherein the steps are:
- to initiate a blocking of the call by the second device (2) of the second user (B),
- to initiate a redirected call by the second device (2) of the second user (B) to the first device (1b) of the first user (A),
- to initiate a voicemail by the second device (2) of the second user (B) to the first device (1b) of the first user (A),
- to initiate the displaying of a call of the user category by a display unit of the second device (2) of the second user (B), and/or
- to initiate the entry of the first user (A) in a white list or black list.

12. Method for call verification and scam detection according to claim 10 or 11,
wherein the user categories are stored in a user category data base (17) and/or the defined rules are stored in a rules data base (18), in particular wherein the user category data base (17) and the rules data base (18) are located within the central network section (3).

13. Method for call verification and scam detection according to one of the claims 1 to 4, wherein a first security computer program product (30a) is implemented in the first device (1c) of the first user (A) and wherein a second security computer program product (30b) is implemented in the second device (2) of the second user (B), wherein the second security computer program product (30b) receives a communication form a security computer program product backend (13) located in the central network section (3) with a notification of a third security category (23) of the first user (A), which is associated with a pre-verified first user (A).

14. Scam detection unit (10) for call verification and scam detection located in a
central network section (3) configured to:
- detect a call identification information of a call from a first user (A) by means of a first device (1, 1a, 1b, 1c) to reach a second user (B) having a second device (2);
- verify the trustworthiness of the call by the first user (A) based on the call identification information, and to classify the trustworthiness into at least two security categories (21, 22, 23); and
- notify the security category (21, 22, 23) to which the call by the first user (A) has been classified by a communication to the second device (2) of the second user (B)
, wherein the call identification information is detected from the header information of the call.

15. Computer Program Product (30b) for call verification and scam detection which, when executed by a user device (2), causes the user device (2):
- to establish a connection with a security computer program product backend (13), that is located in a central network section (3) and connected to a scam detection unit (10); and
- to perform one of the claims 8 to 13.

## Patentansprüche

1. Verfahren zur Anrufverifizierung und Betrugserkennung, umfassend die folgenden Schritte:
- einen Anrufschritt (101), in dem ein erster Benutzer (A) mittels einer ersten Vorrichtung (1a, 1b, 1c) einen Anruf tätigt, um einen zweiten Benutzer (B), der eine zweite Vorrichtung (2) aufweist, zu erreichen, wobei der Anruf eine Anrufidentifikationsinformation umfasst;
- einen Erfassungsschritt (102), in dem die Anrufidentifikationsinformation durch eine Betrugserkennungseinheit (10), die in einem zentralen Netzabschnitt (3) angeordnet ist, erfasst wird;
- einen Verifizierungsschritt (103), in dem die Betrugserkennungseinheit (10) die Vertrauenswürdigkeit des Anrufs durch den ersten Benutzer (A) basierend auf der Anrufidentifikationsinformation bestimmt und die Vertrauenswürdigkeit in mindestens zwei Sicherheitskategorien (21, 22, 23) klassifiziert; und
- einen Benachrichtigungsschritt (104), in dem die Sicherheitskategorie (21, 22, 23), in die der Anruf durch den ersten Benutzer (A) klassifiziert worden ist, an die zweite (2) Vorrichtung des zweiten Benutzers (B) übermittelt wird,
wobei die Anrufidentifikationsinformation aus einem Header des Anrufs erfasst wird.

2. Verfahren zur Anrufverifizierung und Betrugserkennung gemäß Anspruch 1, wobei die Anrufidentifikationsinformation ein Uniform Resource Identifier (URI), eine FROM-Information, ein History Info Header (HIH), eine Trunk-ID, eine P-Asserted-Identity (PAI) und/oder eine Netzwerk-Gateway-Identifikation ist.

3. Verfahren zur Anrufverifizierung und Betrugserkennung gemäß einem der vorhergehenden Ansprüche, wobei innerhalb des Verifizierungsschritts (103) auf Grundlage der Anrufidentifikationsinformation eine Betrugswahrscheinlichkeit bestimmt wird.

4. Verfahren zur Anrufverifizierung und Betrugserkennung gemäß Anspruch 3, wobei die Betrugswahrscheinlichkeit mit einem Schwellenwert verglichen wird und wobei der Schwellenwert verwendet wird, um den Anruf des ersten Benutzers (A) in eine erste Sicherheitskategorie (21), die einem vertrauenswürdigen ersten Benutzer (A) zugeordnet ist, oder eine zweite Sicherheitskategorie (22), die einem betrügerischen ersten Benutzer (A) zugeordnet ist, zu klassifizieren, insbesondere wobei der Anruf des ersten Benutzers (A) in die erste Sicherheitskategorie (21) klassifiziert wird, wenn die Betrugswahrscheinlichkeit unterhalb des Schwellenwerts liegt, und der Anruf des ersten Benutzers (A) in die zweite Sicherheitskategorie (22) klassifiziert wird, wenn die Betrugswahrscheinlichkeit oberhalb unterhalb des Schwellenwerts liegt.

5. Verfahren zur Anrufverifizierung und Betrugserkennung gemäß einem der vorhergehenden Ansprüche, wobei die Sicherheitskategorie (21, 22, 23) des Anrufs des ersten Benutzers (A) als Anruferidentifikationsname (CNAM) und/oder Dienstfähigkeitsfeld (SCF) in einem Anruf an die zweite Vorrichtung (2) des zweiten Benutzers (B) an die zweite Vorrichtung (2) des zweiten Benutzers (B) übermittelt wird, insbesondere wobei die Sicherheitskategorie (21, 22, 23) des Anrufs des ersten Benutzers (A) auf der zweiten Vorrichtung (2) des zweiten Benutzers (B) als Anruferidentifikationsname (CNAM) angezeigt wird.

6. Verfahren zur Anrufverifizierung und Betrugserkennung gemäß Anspruch 5, wobei ein Sicherheitscomputerprogrammprodukt (30a) in der ersten Vorrichtung (1c) des ersten Benutzers (A) implementiert ist, wobei der Anruferidentifikationsname (CNAM) und/oder das Dienstfähigkeitsfeld (SCF) in dem Anruf an die zweite Vorrichtung (2) des zweiten Benutzers (B) eine Information enthält, die eine dritte Sicherheitskategorie (23) angibt, die einem vorverifizierten ersten Benutzer (A) zugeordnet ist, insbesondere wobei der Anruferidentifikationsname (CNAM) den Namen, die Organisation, den Status und/oder den Grund für den Anruf des ersten Benutzers (A) enthält.

7. Verfahren zur Anrufverifizierung und Betrugserkennung gemäß Anspruch 6, wobei der erste Benutzer (A) einen Vertrag mit einem Netzbetreiber aufweist, der den zentralen Netzabschnitt (3) betreibt, und wobei der Anruferidentifikationsname (CNAM) und/oder das Dienstfähigkeitsfeld (SCF) eine definierte Information bezüglich des ersten Benutzers (A) enthält, insbesondere eine Marke, ein Logo oder ein Warenzeichen des ersten Benutzers (A).

8. Verfahren zur Anrufverifizierung und Betrugserkennung gemäß einem der Ansprüche 1 bis 4, wobei ein Sicherheitscomputerprogrammprodukt (30b) in der zweiten Vorrichtung (2) des zweiten Benutzers (B) implementiert ist, das eingerichtet ist, eine Kommunikationsform eines Backends des Sicherheitscomputerprogrammprodukts (13), das in dem zentralen Netzabschnitt (3) angeordnet ist, mit einer Benachrichtigung über die Sicherheitskategorie (21, 22, 23) des ersten Benutzers (A) zu empfangen.

9. Verfahren zur Anrufverifizierung und Betrugserkennung gemäß Anspruch 8, wobei das Sicherheitscomputerprogrammprodukt (30b)
- ein Sperren des Anrufs durch die zweite Vorrichtung (2) des zweiten Benutzers (B) einleitet,
- einen umgeleiteten Anruf durch die zweite Vorrichtung (2) des zweiten Benutzers (B) an die erste Vorrichtung (1a) des ersten Benutzers (A) einleitet und/oder
- eine optische und/oder akustische Warnung durch die zweite Vorrichtung (2) einleitet, insbesondere, um das Anzeigen eines betrügerischen Anrufs durch eine Anzeigeeinheit der zweiten Vorrichtung (2) des zweiten Benutzers (B) einzuleiten,
wenn die zweite Sicherheitskategorie (22) übermittelt wird, insbesondere wobei das Computerprogrammprodukt (30b) eingerichtet ist, festzulegen, welcher Schritt eingeleitet wird, vorzugsweise dadurch, dass der zweite Benutzer (B) mittels einer Auswahleinheit der zweiten Vorrichtung (2) eine Auswahl trifft.

10. Verfahren zur Anrufverifizierung und Betrugserkennung gemäß Anspruch 8, wobei das Sicherheitscomputerprogrammprodukt (30b) eingerichtet ist, Benutzerkategorien erster Benutzer (A) festzulegen, die als mit der ersten Sicherheitskategorie (21) klassifiziert sind, wobei diese Benutzerkategorien erster Benutzer (A) beispielsweise Telemarketing-Benutzer, Privatbenutzer oder Umfragebenutzer sind.

11. Verfahren zur Anrufverifizierung und Betrugserkennung gemäß Anspruch 10, wobei das Sicherheitscomputerprogrammprodukt (30b) eingerichtet ist, Regeln für jede der Benutzerkategorien festzulegen, die bewirken, dass bei Empfang eines Anrufs von einem Benutzer dieser Benutzerkategorie Schritte durch die zweite Vorrichtung (2) durchgeführt werden, insbesondere wobei die Schritte sind:
- ein Sperren des Anrufs durch die zweite Vorrichtung (2) des zweiten Benutzers (B) einzuleiten,
- einen umgeleiteten Anruf durch die zweite Vorrichtung (2) des zweiten Benutzers (B) an die erste Vorrichtung (1b) des ersten Benutzers (A) einzuleiten,
- eine Voicemail durch die zweite Vorrichtung (2) des zweiten Benutzers (B) an die erste Vorrichtung (1b) des ersten Benutzers (A) einzuleiten,
- das Anzeigen eines Anrufs der Benutzerkategorie durch eine Anzeigeeinheit der zweiten Vorrichtung (2) des zweiten Benutzers (B) einzuleiten und/oder
- das Eintragen des ersten Benutzers (A) in eine Whitelist oder Blacklist einzuleiten.

12. Verfahren zur Anrufverifizierung und Betrugserkennung gemäß Anspruch 10 oder 11, wobei die Benutzerkategorien in einer Benutzerkategoriedatenbank (17) gespeichert sind und/oder die definierten Regeln in einer Regeldatenbank (18) gespeichert sind, insbesondere wobei die Benutzerkategoriedatenbank (17) und die Regeldatenbank (18) innerhalb des zentralen Netzabschnitts (3) angeordnet sind.

13. Verfahren zur Anrufverifizierung und Betrugserkennung gemäß einem der Ansprüche 1 bis 4, wobei ein erstes Sicherheitscomputerprogrammprodukt (30a) in der ersten Vorrichtung (1c) des ersten Benutzers (A) implementiert ist und wobei ein zweites Sicherheitscomputerprogrammprodukt (30b) in der zweiten Vorrichtung (2) des zweiten Benutzers (B) implementiert ist, wobei das zweite Sicherheitscomputerprogrammprodukt (30b) eine Kommunikationsform eines Backends des Sicherheitscomputerprogrammprodukts (13), das in dem zentralen Netzabschnitt (3) angeordnet ist, mit einer Benachrichtigung über eine dritte Sicherheitskategorie (23) des ersten Benutzers (A), die einem vorverifizierten ersten Benutzer (A) zugeordnet ist, empfängt.

14. Betrugserkennungseinheit (10) zur Anrufverifizierung und Betrugserkennung, angeordnet in einem zentralen Netzabschnitt (3), eingerichtet zum:
- Erfassen einer Anrufidentifikationsinformation eines Anrufs von einem ersten Benutzer (A) mittels einer ersten Vorrichtung (1, 1a, 1b, 1c), um einen zweiten Benutzer (B), der eine zweite Vorrichtung (2) aufweist, zu erreichen;
- Verifizieren der Vertrauenswürdigkeit des Anrufs durch den ersten Benutzer (A) basierend auf der Anrufidentifikationsinformation und Klassifizieren der Vertrauenswürdigkeit in mindestens zwei Sicherheitskategorien (21, 22, 23); und
- Mitteilen der Sicherheitskategorie (21, 22, 23), in die der Anruf durch den ersten Benutzer (A) klassifiziert worden ist, durch eine Kommunikation an die zweite Vorrichtung (2) des zweiten Benutzers (B),
wobei die Anrufidentifikationsinformation aus der Header-Information des Anrufs erfasst wird.

15. Computerprogrammprodukt (30b) zur Anrufverifizierung und Betrugserkennung, das, wenn es durch eine Benutzervorrichtung (2) ausgeführt wird, bewirkt, dass die Benutzervorrichtung (2):
- eine Verbindung mit einem Backend des Sicherheitscomputerprogrammprodukts (13) herstellt, das in einem zentralen Netzabschnitt (3) angeordnet und mit einer Betrugserkennungseinheit (10) verbunden ist; und
- einen der Ansprüche 8 bis 13 ausführt.

## Revendications

1. Procédé de vérification d'appel et de détection d'arnaque comprenant les étapes suivantes :
- une étape d'appel (101), dans laquelle un premier utilisateur (A) émet un appel au moyen d'un premier dispositif (1a, 1b, 1c) pour joindre un second utilisateur (B) disposant d'un second dispositif (2), l'appel comprenant des informations d'identification d'appel ;
- une étape de détection (102), dans laquelle les informations d'identification d'appel sont détectées par une unité de détection d'arnaque (10) située dans une section de réseau central (3) ;
- une étape de vérification (103), dans laquelle l'unité de détection d'arnaque (10) détermine la fiabilité de l'appel par le premier utilisateur (A) sur la base des informations d'identification d'appel, et classe la fiabilité en au moins deux catégories de sécurité (21, 22, 23) ; et
- une étape de notification (104), dans laquelle la catégorie de sécurité (21, 22, 23) dans laquelle l'appel du premier utilisateur (A) a été classé est communiquée au second dispositif (2) du second utilisateur (B),
dans lequel les informations d'identification d'appel sont détectées à partir d'un en-tête de l'appel.

2. Procédé de vérification d'appel et de détection d'arnaque selon la revendication 1, dans lequel les informations d'identification d'appel sont un identificateur de ressource uniforme (URI), des informations FROM, un en-tête d'informations d'historique (HIH), un ID de tronc, une identité affirmée P (PAI) et/ou une identification de passerelle de réseau.

3. Procédé de vérification d'appel et de détection d'arnaque selon l'une des revendications précédentes, dans lequel une probabilité d'arnaque est déterminée au cours de l'étape de vérification (103) sur la base des informations d'identification d'appel.

4. Procédé de vérification d'appel et de détection d'arnaque selon la revendication 3, dans lequel la probabilité d'arnaque est comparée à une valeur de seuil et la valeur de seuil étant utilisée pour classer l'appel du premier utilisateur (A) dans une première catégorie de sécurité (21), associée à un premier utilisateur fiable (A), ou une deuxième catégorie de sécurité (22), associée à un premier utilisateur frauduleux (A), en particulier l'appel du premier utilisateur (A) étant classé dans la première catégorie de sécurité (21), lorsque la probabilité d'arnaque est inférieure au seuil, et l'appel du premier utilisateur (A) est classé dans la deuxième catégorie de sécurité (22), lorsque la probabilité d'arnaque est supérieure inférieure au seuil.

5. Procédé de vérification d'appel et de détection d'arnaque selon l'une des revendications précédentes, dans lequel la catégorie de sécurité (21, 22, 23) de l'appel du premier utilisateur (A) est communiquée au second dispositif (2) du second utilisateur (B) en tant que nom d'identification d'appelant (CNAM) et/ou champ de capacité de service (SCF) lors d'un appel au second dispositif (2) du second utilisateur (B), en particulier la catégorie de sécurité (21, 22, 23) de l'appel du premier utilisateur (A) étant affichée sur le second dispositif (2) du second utilisateur (B) en tant que nom d'identification d'appelant (CNAM).

6. Procédé de vérification d'appel et de détection d'arnaque selon la revendication 5, dans lequel un produit de programme informatique de sécurité (30a) est mis en œuvre dans le premier dispositif (1c) du premier utilisateur (A), le nom d'identification d'appelant (CNAM) et/ou le champ de capacité de service (SCF) dans l'appel au second dispositif (2) du second utilisateur (B) contenant des informations qui indiquent une troisième catégorie de sécurité (23), associée à un premier utilisateur (A) préalablement vérifié, le nom d'identification d'appelant (CNAM) contenant en particulier le nom, l'organisation, l'état et/ou la raison de l'appel du premier utilisateur (A).

7. Procédé de vérification d'appel et de détection d'arnaque selon la revendication 6, dans lequel le premier utilisateur (A) a un contrat avec un opérateur de réseau qui exploite la section de réseau central (3), et le nom d'identification d'appelant (CNAM) et/ou le champ de capacité de service (SCF) contenant des informations définies concernant le premier utilisateur (A), en particulier une marque, un logo ou une marque commerciale du premier utilisateur (A).

8. Procédé de vérification d'appel et de détection d'arnaque selon l'une des revendications 1 à 4, dans lequel un produit de programme informatique de sécurité (30b) est mis en œuvre dans le second dispositif (2) du second utilisateur (B) qui est configuré pour recevoir une communication provenant d'un système dorsal d'un produit de programme informatique de sécurité (13) situé dans la section de réseau central (3) avec une notification de la catégorie de sécurité (21, 22, 23) du premier utilisateur (A).

9. Procédé de vérification d'appel et de détection d'arnaque selon la revendication 8, dans lequel le produit de programme informatique de sécurité (30b)
- déclenche un blocage de l'appel par le second dispositif (2) du second utilisateur (B),
- déclenche un appel redirigé par le second dispositif (2) du second utilisateur (B) vers le premier dispositif (1a) du premier utilisateur (A), et/ou
- déclenche une alerte optique et/ou acoustique par le second dispositif (2), en particulier pour déclencher l'affichage d'un appel frauduleux par une unité d'affichage du second dispositif (2) du second utilisateur (B),
lorsque la deuxième catégorie de sécurité (22) est communiquée, en particulier lorsque le produit de programme informatique (30b) est configuré pour définir quelle étape est déclenchée, de préférence lorsque le second utilisateur (B) effectue une sélection au moyen d'une unité de sélection du second dispositif (2).

10. Procédé de vérification d'appel et de détection d'arnaque selon la revendication 8, dans lequel le produit de programme informatique de sécurité (30b) est configuré pour définir des catégories d'utilisateurs de premiers utilisateurs (A) qui sont classés comme avec la première catégorie de sécurité (21), par exemple ces catégories d'utilisateurs de premiers utilisateurs (A) sont un utilisateur de télémarketing, un utilisateur privé ou un utilisateur de sondage.

11. Procédé de vérification d'appel et de détection d'arnaque selon la revendication 10, dans lequel le produit de programme informatique de sécurité (30b) est configuré pour définir des règles pour chacune des catégories d'utilisateurs qui amènent des étapes à être effectuées par le second dispositif (2) lors de la réception d'un appel provenant d'un utilisateur de cette catégorie d'utilisateur, les étapes consistant en particulier à :
- déclencher un blocage de l'appel par le second dispositif (2) du second utilisateur (B),
- déclencher un appel redirigé par le second dispositif (2) du second utilisateur (B) vers le premier dispositif (1b) du premier utilisateur (A),
- déclencher une messagerie vocale par le second dispositif (2) du second utilisateur (B) vers le premier dispositif (1b) du premier utilisateur (A),
- déclencher l'affichage d'un appel de la catégorie d'utilisateur par une unité d'affichage du second dispositif (2) du second utilisateur (B), et/ou
- déclencher l'entrée du premier utilisateur (A) dans une liste blanche ou dans une liste noire.

12. Procédé de vérification d'appel et de détection d'arnaque selon la revendication 10 ou 11, dans lequel les catégories d'utilisateurs sont stockées dans une base de données de catégories d'utilisateurs (17) et/ou les règles définies sont stockées dans une base de données de règles (18), en particulier la base de données de catégories d'utilisateurs (17) et la base de données de règles (18) étant situées à l'intérieur de la section de réseau central (3).

13. Procédé de vérification d'appel et de détection d'arnaque selon l'une des revendications 1 à 4, dans lequel un premier produit de programme informatique de sécurité (30a) est mis en œuvre dans le premier dispositif (1c) du premier utilisateur (A) et un second produit de programme informatique de sécurité (30b) étant mis en œuvre dans le second dispositif (2) du second utilisateur (B), le second produit de programme informatique de sécurité (30b) recevant une communication provenant d'un système dorsal d'un produit de programme informatique de sécurité (13) situé dans la section de réseau central (3) avec une notification d'une troisième catégorie de sécurité (23) du premier utilisateur (A), associée à un premier utilisateur pré-vérifié (A).

14. Unité de détection d'arnaque (10) pour la vérification d'appel et la détection d'arnaques située dans une section de réseau central (3) configurée pour :
- détecter des informations d'identification d'appel d'un premier utilisateur (A) au moyen d'un premier dispositif (1, 1a, 1b, 1c) pour joindre un second utilisateur (B) disposant d'un second dispositif (2) ;
- vérifier la fiabilité de l'appel par le premier utilisateur (A) sur la base des informations d'identification d'appel et classer la fiabilité dans au moins deux catégories de sécurité (21, 22, 23) ; et
- notifier la catégorie de sécurité (21, 22, 23) dans laquelle l'appel du premier utilisateur (A) a été classé par une communication au second dispositif (2) du second utilisateur (B), les informations d'identification d'appel étant détectées à partir des informations d'en-tête de l'appel.

15. Produit programme informatique (30b) pour la vérification d'appel et la détection d'arnaque qui, lorsqu'il est exécuté par un dispositif utilisateur (2), amène le dispositif utilisateur (2) à :
- établir une connexion avec un système dorsal d'un produit de programme informatique de sécurité (13) situé dans une section de réseau central (3) et connecté à une unité de détection d'arnaque (10) ; et
- réaliser l'une des revendications 8 à 13.
